Europäisches Patentamt

European Patent Office

Office européen des brevets

(11) Veröffentlichungsnummer: **0 171 610**
**B1**

(12) EUROPÄISCHE PATENTSCHRIFT

(45) Veröffentlichungstag der Patentschrifft:
21.03.90

(21) Anmeldenummer: 85108655.3

(22) Anmeldetag: 11.07.85

(51) Int. Cl.⁵: **A 01 G 23/08**

(54) Vorrichtung zum Bearbeiten von Baumstämmen.

(30) Priorität: 16.07.84 DE 3426127

(43) Veröffentlichungstag der Anmeldung:
19.02.86 Patentblatt 86/08

(45) Bekanntmachung des Hinweises auf die Patenterteilung:
21.03.90 Patentblatt 90/12

(84) Bennante Vertragsstaaten:
AT CH FR IT LI NL SE

(56) Entgegenhaltungen:
WO-A-79/00949
FR-A-2 292 563
US-A-3 797 541
US-A-3 981 336

(73) Patentinhaber: **Gebrüder Jäckle GmbH Maschinen- & Gerätebau**
**Büsslingerstrasse 25**
**D-7709 Hilzingen 3 (DE)**

(72) Erfinder: **Jäckle, Lothar**
**Büsslingerstrasse 25**
**D-7709 Hilzingen 3 (DE)**
Erfinder: **Jäckle, Georg**
**Büsslingerstrasse 25**
**D-7709 Hilzingen 3 (DE)**
Erfinder: **Jäckle, Franz**
**Büsslingerstrasse 25**
**D-7709 Hilzingen 3 (DE)**

(74) Vertreter: **Weiss, Peter**
**Schlachthausstrasse 1 Postfach 466**
**D-7700 Singen a.H. (DE)**

EP 0 171 610 B1

## Beschreibung

Die Erfindung betrifft eine Vorrichtung zum Bearbeiten von Baumstämmen insbesondere schwächerer Stärkeklassen mit einem Greifarm, welcher einends feststehende Klammermesser aufweist, während eine Laufkatze mit weiteren Klammermessern entlang dem Greifarm verfahrbar ist.

Die Bearbeitung von Baustämmen, wie das Entasten und das Entrinden, stellt auch heute noch eine sehr arbeitsintensive Maßnahme dar, welche deshalb mit erheblichen Kosten belastet ist. Aus dem Grund werden Baumstämme, insbesondere aus schwächeren Stärkeklassen, meist überhaupt nicht aus dem Bestand geholt, sondern liegengelassen, damit sie im Laufe der Zeit verrotten.

Zum maschinellen Entasten von Baumstämmen höherer Stärkeklassen sind bereits seit geraumer Zeit einige Verfahren und Verrichtungen bekannt, welche jedoch nicht ohne weiteres bei Baumstämmen geringerer Stärkeklasse Anwendung finden können. Zu erwähnen ist hier der sog. "Kletter-Max", welcher am stehenden Stamm diesen umkreisend aufsteigen kann, wobei er an seiner oberen Stirnfläche eine Motorsäge trägt, welche die Äste entfernt. Der Betrieb dieser Maschine bei Stämmen schwächerer Stärkeklasse ist viel zu kostenintensiv und deshalb unrentabel. Die Entastung mit der Hand scheidet aus dem gleichen Grund aus.

In letzter Zeit werden deshalb die Stämme schwächerer Stärkeklassen mit den Ästen zusammen in Spezialtransportern verladen und an Holzhöfe geliefert, welche eine automatische Entastungs- und Entrindungsanlage besitzen. Dabei geht jedoch dem Waldboden wertvoller Rohstoff aus Blatt- und Rindenmaterial verloren.

Die DE-A-3 203 614 zeigt wiederum eine Baumbearbeitungsmaschine mit einem an einem Träger angeordneten Greifer. Dieser wird allerdings nur zum Aufstapeln und Aufnehmen der Baumstämme benutzt.

Ferner ist aus der US-A 3 797 541 eine fest auf einem Zuggefährt montierte kranartige Einrichtung bekannt, mit welcher ein Baum gefällt, entastet und eingeschnitten werden kann. Zum einen ist diese Zuggefährt nur zum Vollernten einsetzbar, da mit ihm enge Rückegassen nicht befahren werden können.

Desweiteren ist der Greifarm so ausgelegt, daß nur stehende Bäume bearbeitet werden können. In jungen Beständen müssen jedoch Durchforstungen, d. h. Fällarbeiten im Bestand selber von Hand durchgeführt werden, so daß die dann weiter zu bearbeitenden Baumstämmen zu den Rückegassen hin transportiert werden müssen und dort auf dem Boden liegen. Diese Stämme können von dem Greifarm nach der US-A 3 797 541 nicht aufgenommen und weiterbearbeitet werden. Ferner ist auch die eingeschränkte Beweglichkeit des eigentlichen Krans zu erwähnen, wodurch der Greifarm nur bestimmte Bewegungen ausführen kann.

Aus der FR-A 2 292 563 ist wiederum eine von der eigentlichen Zugmaschine losgelöste Einrichtung erkennbar, die aus einem Greifarm besteht, an dem eine Laufkatze entlangläuft. Dieser Greifarm dient zum Bearbeiten von liegenden Baumstämmen. Allerdings ist seine Beweglichkeit noch eingeschränkter als diejenige des Greifarmes nach der US-A 3 797 541. Hier muß das Zugfahrzeug immer in eine etwa achsparallele Position zum liegenden Stamm gebracht werden, was bei engen Rückegassen nicht möglich ist oder einen erheblichen Aufwand bedeutet.

Der Erfinder hat sich zum Ziel gesetzt, eine Vorrichtung der o. g. Art zu entwickeln, mit deren Hilfe ein Bearbeiten von Baumstämmen auch auf engsten Rückegassen und beispielsweise im Bestand selbst möglich ist.

Zur Lösung dieser Aufgabe führt, daß der Greifarm exzentrisch nahe den feststehenden Klammermessern von einer Zange gehalten ist und mit dieser eine Drehachse bildet, daß die Zange von einem Traggerüst gehalten ist und mit diesem eine Drehachse bildet, daß das Traggerüst mit einem Vorschubarm eines Teleskoparmes eine Drehachse bildet, daß der Teleskoparm mit einem Tragmast über eine weitere Drehachse verbunden ist, welche eine eigene etwa vertikale Drehachse besitzt.

Es ist leicht erkennbar, daß diese fünf Drehachsen für den Greifarm bedeuten, daß dieser allseits bewegbar ist. Durch die exzentrische Anlenkung des Greifarmes wird bewirkt, daß der Greifarm wie eine Hand bewegt werden kann. Gleichgültig in welcher Lage sich ein zu bearbeitender Baumstamm zum Zugfahrzeug befindet, der Greifarm greift ihn mit seinen feststehenden Klammermessern und seiner Laufkatze an und kann ihn sowohl bearbeiten wie auch in jede andere gewünschte Lage verbringen. Hierdurch ist auch eine Bearbeitung von Baumstämmen möglich, welche rechtwinklig zur Rückegasse vorgeliefert worden sind und dort beispielsweise auf einem ungeordneten Haufen liegen.

Bevorzugt soll ein Antrieb für die Drehbewegung des Greifarmes um seine Drehachse mit der Zange über eine in einem Zylinder bewegbare Kolbenstange geschehen, wobei der Zylinder von zwei Klemmstreifen an der Zange aufgenommen ist, während die Kolbenstange an einem mit dem Greifarm verbundenen Lastenstreifen angreift.

Weiterhin soll an dem Traggerüst ein Antrieb angeordnet sein, welcher die Zange um ihre Drehachse mit dem Traggerüst dreht. Das Traggerüst ist an dem Vorschubarm befestigt und bildet mit diesem zusammen ein Drehgelenk um die Drehachse, wobei an einer anderen Stelle ein weiterer Antrieb die Drehung um diese Drehachse bewirkt.

Bevorzugt soll diesem Antrieb eine Gleichgewichtseinrichtung zugeordnet sein, welche den Antrieb steuert, damit das Traggerüst immer in einer vertikalen Lage verbleibt.

Der Vorschubarm wiederum greift in eine Aufnahmehülse ein und bildet zusammen mit dieser den Teleskoparm.

Der Teleskoparm ist über das weitere Drehgelenk mit dem Tragmast verbunden, wobei dieses Drehgelenk um die Drehachse aufgrund eines Antriebes durch einen Zylinder-Kolben-System bewegbar ist.

Der Tragmast sitzt wiederum über ein Halslager einem Zylinder auf, welcher einen Antrieb zum Drehen des Tragmastes um die vertikale Drehachse beinhaltet. Dieser Zylinder letztendlich soll an einem Querträger festliegen, welcher mit einem Rückeschlepper od. dgl. verbunden ist.

Die ganze Vorrichtung soll bevorzugt mit einem Rückeschlepper od. dgl. verbunden sein, der gleichzeitig für Ihre Standfestigkeit und für die Versorgung Ihres Hydraulikantriebes sorgt. Die Antriebe für sämtliche Bewegungen der erfindungsgemäßen Vorrichtung sollen zwar bevorzugt hydraulisch betrieben werden, der Erfindungsgedanke umfaßt aber auch pneumatische oder elekrische Antriebsmittel.

An den Rückeschlepper kann gleichzeitig auch ein Ladewagen angekoppelt werden, so daß der aufgenommene und entastete Stamm mit dem Greifarm über den Ladewagen geführt und in der richtigen Länge abgesägt werden kann.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in

Fig. 1    eine schematische, perspektivische Darstellung einer Vorrichtung zum Entasten und Einschneiden von Schwachholz, gekoppelt an einen Rückeschlepper;

Fig. 2    eine vergrößerte, perspektivische Teilansicht der Entastungsvorrichtung von unten nach Fig. 1 in einer anderen Gebrauchslage.

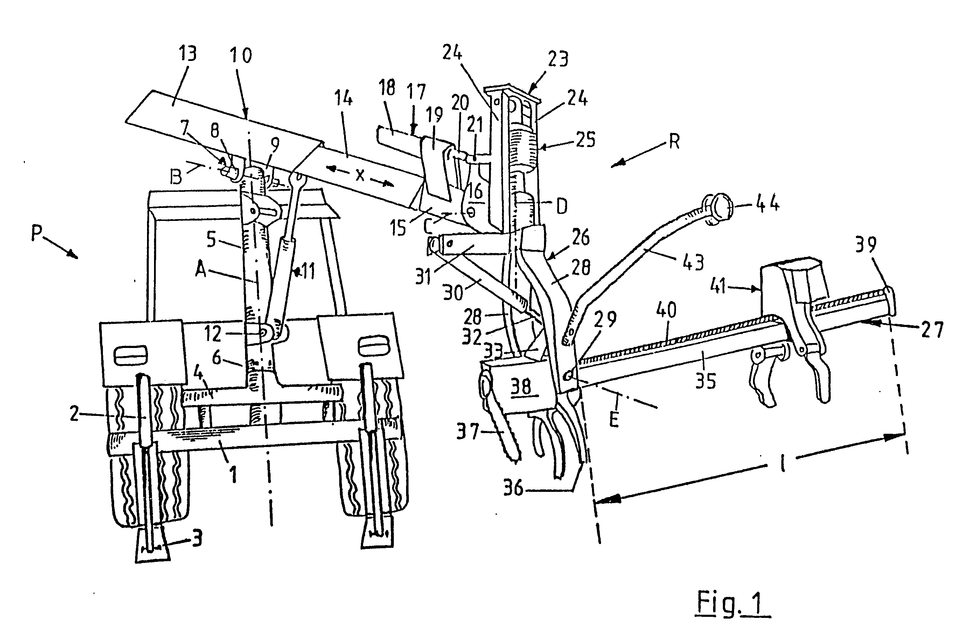

Nach Fig. 1 ist eine Vorrichtung R zum Entasten und Einschneiden von insbesondere Schwachholz an einen Rückeschlepper P gekoppelt. Dabei weist sie vorzugsweise eine eigene Hydraulik auf, welche vom Rückeschlepper aus bedient werden kann, deren Leitungen jedoch der Übersichtlichkeit halber nicht dargestellt sind. Im Rahmen der Erfindung liegt jedoch auch, daß die eigene Hydraulik mit der Hydraulik des Rückeschleppers gekoppelt ist.

Zur lösbaren Verbindung mit dem Rückeschlepper P ist ein Querträger 1 vorgesehen, der beidseits je einen hydraulisch betriebenen Differentialzylinder 2 zum Absenken und Anheben von Bodenstützen 3 trägt.

Dem Querträger 1 liegt ein Rohr 4 auf, in welchem beispielsweise ein hydraulisch betriebener schwenkmotorenähnlicher Antrieb mit geradliniger Arbeitskolbenbewegung und einem Zahnstangengetriebe vorgesehen sein kann. Dieses Zahnstangengetriebe kämmt dann eine Zahnung einer Achse A, welche in Fig. 1 gestrichelt angedeutet ist und die eine Längsachse für eine Drehung eines Tragmastes 55 der Vorrichtung R bildet. Ein entsprechendes unteres Halslager ist bei 6 vorgesehen.

Jenseits dieses Halslagers 6 ist ein Drehgelenk 7 mit einer Drehachse B angeordnet, welche senkrecht auf die Längsachse A trifft. Das Drehgelenk 7 wird von einem Bolzen 8 gebildet, welcher den Tragmast 5 entlang der Drehachse B durchbohrt und an dem über beidseitige Laschen 9 ein Teleskoparm 10 bewegbar angeordnet ist. Dieser Teleskoparm 10 kann weiterhin über ein hydraulisch betriebenes Zylinder- Kolben- System 11 bewegt werden, welches einerseits über ein Drehgelenk 12 mit dem Tragmast 5 verbunden ist, dann jedoch von diesem zwecks Verbesserung der Hebelwirkung absteht und an der Unterseite des Teleskoparms 10 angelenkt ist.

Der Teleskoparm 10 besteht im wesentlichen aus einer querschnittlich dreiecksförmigen Aufnahmehülse 13, in welcher ein ebenfalls querschnittlich dreiecksförmiger Vorschubarm 14 in Richtung x gleitbar lagert, wobei der entsprechend notwendige Schubantrieb für den Vorschubarm 14 in der Aufnahmehülse 13 untergebracht ist. Die Aufnahmehülse 13 weist auch die Laschen 9 zur Verbindung mit dem Drehgelenk 7 und die Anlenkstelle für das Zylinder- Kolben- System 11 auf.

Der querschnittlich dreiecksförmige Vorschubarm 14 verjüngt sich kopfseitig zu einem plattenförmigen Teil 15, welcher von zwei parallel liegenden Drehscheiben 16 aufgenommen wird, für die eine Drehachse C vorgesehen Ist. Der entsprechende Antrieb 17 für die Drehbewegung der Drehscheiben 16 um die Drehachse C besteht aus einem Arbeitszylinder 18, welcher von einem Klammerstreifen 19 umfasst ist, der ähnlich wie die Drehscheiben 16 auch den plattenförmigen Teil 15 umklammert. Aus dem Arbeitszylinder 18 ragt eine Kolbenstange 20, welche über einen Bolzen 21 mit den Drehscheiben 16 gelenkig verbunden ist. Die Drehscheiben 16 sind an einem Traggerüst 23 festgelegt, das zwischen zwei Säulen 24 einen hydraulischen Antrieb 25 für eine Drehung einer Zange 26 um eine Drehachse D aufnimmt. Bei diesem Antrieb 25 handelt es sich vorzugsweise um einen hydraulischen Motor handelsüblicher Bauart.

Dem Antrieb 17 ist Im übrigen – nicht näher gezeigt – eine Gleichgewicht haltende Einrichtung zugeordnet, welche einer Verlagerung der Drehachse D aus ihrer vertikalen Stellung entgegenwirkt. Diese Einrichtung besteht beispielsweise aus einem mit Quecksilber gefüllten waagerecht gelagerten Röhrchen. Sobald sich das Traggerüst 23 bzw. der Antrieb 25 aus seiner vertikalen Lage bewegt, fliesst das Quecksilber zu einer Stirnseite des Röhrchens und schaltet dort eine Bewegung des Antriebs 17 ein. Damit wird eine günstigere Lastverteilung der gesamten Vorrichtung R, eine Verringerung des Verschleisses des – nicht dargestellten – Halslagers zwischen Traggerüst 23 und Zange 26 erreicht und die Bewegung eines nachfolgend beschriebenen Greifarms 27 überschaubarer gestaltet.

Dieser Greifarm 27 wird von zwei Backen 28 der Zange 26 aufgenommen, wobei diese zusammen ein weiteres Drehgelenk 29 mit einer Drehachse E bilden. Der Antrieb für die entsprechende Bewegung um die Drehachse E besteht wiederum aus einem Zylinder 30, welcher von zwei etwa senkrecht nach hinten von der Zange 26 abragenden Klemmstreifen 31 gehalten ist. Die diesem Zylinder 30 zugeordnete Kolbenstange 32 greift zwischen die beiden Backen 28 der Zange 26 hindurch und ist dort – verdeckt – mit von dem Greifarm 27 hochstehenden Laschenstreifen 33 verbunden. Auf diese Weise wird ein günstiger Hebelarm für das Anheben und Absenken des Greifarms 27 erzeugt. Das Drehgelenk 29 ist im übrigen exzentrisch an dem Greifar 27 zur besseren Lastverteilung bei gleichzeitig möglicher ungehinderter Bearbeitung von Stämmen angeordnet. Es befindet sich an einem Metallbalken 35 rechteckigen Querschnitts, welcher sich von diesem aus in einer Länge 1 nach vorne erstreckt, während nach hinten ein Aufnahmegehäuse 38 für einen hydraulischen Antrieb von drei Klammermessern 36 und einer Kappsäge 37 angeordnet ist.

Den Metallbalken 35 überspannt zwischen dem Gehäuse 38 und einer Abschlussklammer 39 eine Kette 40, welche von einer Laufkatze 41 mit – nicht dargestelltem – Kettenrad nebst Antrieb befahren wird. Auch die Laufkatze 41 weist zwei Klammermesser 42 auf.

Die über dem Greifarm 27 angeordnete und und mit der Zange 26 über einen Hebelarm 43 verbundene Tänzerrolle 44 dient dem Fernhalten – nicht gezeigter – hydraulischer Leitungen für den Antrieb und die Bewegung der Klammermesser 42 der Laufkatze 41.

Mit Hilfe der vielen Drehachsen A – E ist es möglich, Stämme in einer beliebigen Lage am Wegrand mit den Klammermessern 36 und 42 zu ergreifen. Zum Entasten fährt als erstes die Laufkatze 41 entlang dem Metallbalken 35. Solange wird der Stamm fest von den Klammermessern 36 gehalten. Danach umklammert die Laufkatze 41 nun fest den Stamm und schiebt ihn durch die etwas gelösten Klammermesser 36. So werden auch die letzten Äste beseitigt. Da die Länge 1 dem gewünschten Mass der Stämme etwa entspricht, können diese Stücke mittels der Kappsäge 37 von dem Stamm abgelängt werden.

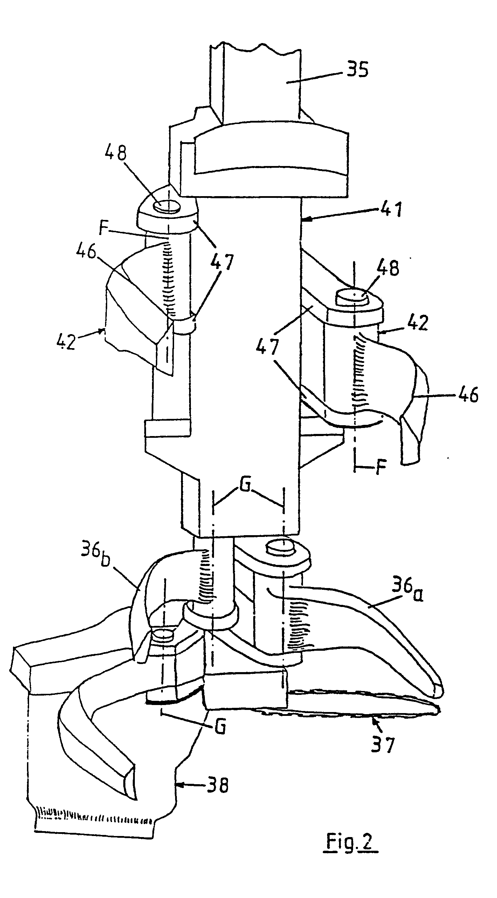

Die Anordnung der Klammermesser 36 und 42 ist nochmals deutlicher in Fig. 2 in einer Unteransicht zu erkennen. Dort befindet sich die Laufkatze 41 am Anschlag nahe bei dem Gehäuse 38. Ihre beiden Klammermesser 42 sind versetzt zueinander angeordnet und weisen Schneiden 46 auf. Zwei Laschenpaare 47 und je ein Bolzen 48 bilden je eine Drehachse F für die Klammermesser 42, welche hydraulisch über nicht dargestellte Exzenternocken bewegt werden.

In ähnlicher Weise sind auch die Klammermesser 36a und 36b um je eine Drehachse G gelagert, während das dritte Klammermesser 36c zwar auch die Drehachse G aufweist, aber so ausgebildet ist, dass es den aufzunehmenden Stamm von unten her umgreift.

## Patentansprüche

1. Vorrichtung zum Bearbeiten von Baumstämmen, insbesondere schwächerer Stärkeklassen mit einem Greifarm, welcher einends feststehende Klammermesser aufweist, während eine Laufkatze mit weiteren Klammermessern entlang dem Greifarm verfahrbar ist, dadurch gekennzeichnet, daß der Greifarm (27) exzentrisch nahe den feststehenden Klammermessern (36) von einer Zange (26) gehalten ist und mit dieser eine Drehachse (E) bildet, daß die Zange (26) von einem Traggerüst (23) gehalten ist und mit diesem eine Drehachse (D) bildet, daß das Traggerüst (23) mit einem Vorschubarm (14) eines Telekoparmes (10) eine Drehachse (C) bildet, daß der Teleskoparm (10) mit einem Tragmast (5) über eine weitere Drehachse (B) verbunden ist, welche eine eigene etwa vertikale Drehachse (A) besitzt.

2. Vorrichtung nach Anspruch 1, dadurch gekennzeichnet, daß ein Antrieb für die Drehbewegung des Greifarmes (27) um die Achse (E) über eine in einem Zylinder (30) bewegbare Kolbenstange (32) geschieht und der Zylinder (30) von zwei Klemmstreifen (31) an der Zange (32) aufgenommen ist, während die Kolbenstange (32) an einem mit dem Greifarm (27) verbundenen Laschenstreifen (33) angreift.

3. Vorrichtung nach Anspruch 1 oder 2, dadurch gekennzeichnet, daß an dem Traggerüst (23) ein Antrieb (25) angeordnet ist, welcher die Zange (26) um die Drehachse (D) dreht.

4. Vorrichtung nach einem der Ansprüche 1 bis 3, dadurch gekennzeichnet, daß an dem Traggerüst (23) Drehscheiben (16) festgelegt sind, welche einen abgeflachten Teil (15) des Vorschubarmes (14) umfassen und zusammen mit diesem ein Drehgelenk um die Drehachse (C) bilden, wobei an einer anderen Stelle ein Antrieb (17) die Drehscheiben (16) angreift und die Drehung um die Drehachse (C) bewirkt.

5. Vorrichtung nach Anspruch 4, dadurch gekennzeichnet, daß dem Antrieb (17) eine Gleichgewichtseinrichtung zugeordnet ist, welche den Antrieb (17) steuert, damit das Traggerüst (23) immer in einer vertikalen Lage verbleibt.

6. Vorrichtung nach Anspruch 5, dadurch gekennzeichnet, daß die Gleichgewichtseinrichtung aus einem mit Quecksilber teilweise gefüllten, waagrechten Röhrchen besteht, wobei das Quecksilber beidends des Röhrchens ein Schaltsignal für den Antrieb (17) auslöst.

7. Vorrichtung nach wenigstens einem der Ansprüche 1 bis 6, dadurch gekennzeichnet, daß der Vorschubarm (14) in eine Aufnahmehülse (13) eingreift und zusammen mit dieser den Teleskoparm (10) bildet, wobei der Vorschubarm (14) in Richtung (x) verschiebbar ist.

8. Vorrichtung nach Anspruch 7, dadurch gekennzeichnet, daß der Teleskoparm (10) über ein Drehgelenk (7) mit dem Tragmast (5) verbunden ist, wobei das Drehgelenk (7) um die Drehachse (B) aufgrund eines Antriebes durch ein Zylinder-Kolben-System (11) bewegbar ist.

9. Vorrichtung nach wenigstens einem der Ansprüche 1 bis 8, dadurch gekennzeichnet, daß der Tragmast (5) über ein Halslager (6) einem Rohr (4) aufsitzt, das einen Antrieb beinhaltet zum Drehen des Tragmastes (5) um die Drehachse (A).

10. Vorrichtung nach Anspruch 9, dadurch gekennzeichnet, daß das Rohr (4) mit einem Querträger (1) verbunden ist, welcher an einem Rückeschlepper (P) od. dgl. befestigt ist, wobei dem Querträger (1) Differentialzylinder (2) zum Absenken von Bodenstützen (3) zugeordnet sind.

**Claims**

1. Apparatus for working tree trunks, particularly weaker varieties with a gripping arm, which has at one end fixed clamp knives, whilst a travelling winch with further clamp knives is movable along the gripping arm, characterized in that the gripping arm (27) is eccentrically held by a gripper (26) close to the fixed clamp knives (36) and forms a rotation axis (E) therewith, that the gripper (26) is held by a supporting framework (23) and with the latter forms a rotation axis (D), that the supporting framework (23) forms with a feed arm (14) of a telescopic arm (10) a rotation axis (C) and that the telescopic arm (10) is connected to a pole (5) via a further rotation axis (B), which has its own vertical rotation axis (A).

2. Apparatus according to claim 1, characterized in that the drive for the rotary movement of the gripping arm (27) about axis (E) takes place by means of a piston rod (32) movable in a cylinder (30) and the latter is received by two clamping strips (31) on gripper (32), whilst the piston rod (32) engages on a shackle strip (33) connected to the gripping arm (27).

3. Apparatus according to claims 1 or 2, characterized in that on the supporting framework (23) is provided a drive (25), which rotates the gripper (26) about rotation axis (D).

4. Apparatus according to one of the claims 1 to 3, characterized in that to the supporting framework (23) are fixed rotating disks (16), which embrace a flattened part (15) of feed arm (14) and together with the latter form a pivot joint about rotation axis (C), a drive (17) engaging on the rotating disk (16) at another point and brings about the rotation about rotation axis (C).

5. Apparatus according to claim 4, characterized in that with the drive (17) is associated a balance means, which controls the drive (17), so that the supporting framework (23) always remains in a vertical position.

6. Apparatus according to claim 5, characterized in that the balance means comprises a partly mercury filled, horizontal tube, the mercury triggering an operating signal for the drive (17) at both ends of the tube.

7. Apparatus according to at least one of the claims 1 to 6, characterized in that the feed arm (14) engages in a reception sleeve (13) and together with the latter forms the telescopic arm (10), the feed arm (14) being movable in direction (x).

8. Apparatus according to claim 7, characterized in that the telescopic arm (10) is connected via a pivot joint (7) to the pole (5), the pivot joint (7) being movable about rotation axis (B) as a result of a drive by a cylinder-piston system (11).

9. Apparatus according to at least one of the claims 1 to 8, characterized in that the supporting framework (5) is mounted by means of a journal bearing (6) on a pipe (4), which incorporates a drive for rotating pole (5) about rotation axis (A).

10. Apparatus according to claim 9, characterized in that the pipe (4) is connected to a cross-member (1), which is fixed to a backdragger (P) or the like, differential cylinders (2) for lowering the ground support (3) being associated with the cross-member (1).

**Revendications**

1. Appareil pour l'usinage des troncs d'arbres, en particulier de classes d'épaisseur faible, comportant un bras de préhension qui présente une lame à griffe fixée à une extrémité, tandis qu'un chariot mobile portant les autres lames à griffe est déplaçable le long du bras de préhension, caractérisé en ce que le bras de préhension (27) est maintenu de manière excentrique à proximité des lames à griffe (36) fixes, par une pince (26) et forme avec celle-ci un axe de rotation (E), en ce que la pince (26) est maintenue par un bâti-support (23) et forme avec celui-ci un axe de rotation (D), en ce que le bâti-support (23) forme, à l'aide d'un bras d'avancement (14) d'un bras télescopique (10), un axe de rotation (C), en ce que le bras télescopique (10) est relié à un mât support (5) par l'intermédiaire d'un axe de rotation (B) supplémentaire pourvu d'un axe de rotation (A) propre à peu près vertical.

2. Appareil selon la revendication 1, caractérisé en ce qu'un entraînement pour le mouvement rotatif du bras de préhension (27) s'effectue autour de l'axe (E) par l'intermédiaire d'une tige de piston (32) mobile dans un cylindre de vérin (30), et le vérin (30) étant supporté par deux bandes de

9

serrage (31) situées sur la pince (32), tandis que la tige de piston (32) agit sur une bande d'attache (33) reliée au bras de préhension (27).

3. Appareil selon la revendication 1 ou 2, caractérisé en ce qu'un entraînement (25) faisant tourner la pince (26) autour de l'axe de rotation (D) est disposé sur le bâti-support (23).

4. Appareil selon l'une des revendications 1 à 3, caractérisé en ce que des plaques tournantes (16) sont fixées sur le bâti-support (23) et entourent une partie (15) aplatie du bras d'avancement (14), et forment avec celui-ci une articulation tournante autour de l'axe de rotation (C), un entraînement (17) agissant sur les plaques tournantes (16) à un autre endroit et provoquant la rotation autour de l'axe de rotation (C).

5. Appareil selon la revendication 4, caractérisé en ce qu'un dispositif d'équilibrage commandé par l'entraînement (17) est associé à ce dernier, afin que le bâti-support (23) demeure toujours dans une position verticale.

6. Appareil selon la revendication 5, caractérisé en ce que le dispositif d'équilibrage se compose d'un petit tube horizontal rempli partiellement de mercure, le mercure déclenchant aux deux extrémités du petit tube un signal de commutation pour l'entraînement (17).

7. Appareil selon au moins une des revendications 1 à 6, caractérisé en ce que le bras d'avancement (14) s'engage dans un manchon de réception (13), et forme avec celui-ci le bras télescopique (10), le bras d'avancement (14) étant mobile dans une direction (x).

8. Appareil selon la revendication 7, caractérisé en ce que le bras télescopique (10) est relié au mât support (5) par l'intermédiaire d'une articulation tournante (7) qui est mobile autour de l'axe de rotation (B) en raison d'un entraînement par un système à piston et cylindre (11).

9. Appareil selon au moins une des revendications 1 à 8, caractérisé en ce que le mât support (5) repose, par l'intermédiaire d'un palier à collet (6), sur un tube (4) qui contient un entraînement en vue de faire tourner le mât support (5) autour de l'axe de rotation (A).

10. Appareil selon la revendication 9, caractérisé en ce que le tube (4) est relié à un support transversal (1), qui est fixé à un tracteur à équipement arrière (P) ou similaire, des vérins différentiels (2) étant associés au support transversal (1) en vue d'abaisser des appuis au sol (3).

Fig.1

Fig.2